# EUROPEAN PATENT APPLICATION

(11) **EP 2 096 863 A2**
(43) Date of publication of application: **02.09.2009**
(21) Application number: 09002826.7
(22) Date of filing: 27.02.2009
(51) Int. Cl.: H04N 5/232

(54) **Electronic device with image catching unit**

(30) Priority: 29.02.2008 TW 97203536 U
(71) Applicant: Giga-Byte Technology Co., Ltd., Taipei (TW)
(72) Inventor: Su, Yung Hung, Hain-Tien, Taipei County (TW); Huang, Shih Yuan, Hain-Tien, Taipei County (TW); Kao, Lin Yu, Hain-Tien, Taipei County (TW); Chen, Chun Hung, Hain-Tien, Taipei County (TW); Kang, Chia Wei, Hain-Tien, Taipei County (TW)
(74) Representative: Brandenburger, Karin

(57) **Abstract**

For an electronic apparatus, respectively a first photo-taking unit on the body captures a first image and a second photo-taking unit on the body captures a second image. And then the professor in the body composes a third image from a first image and a second image, and displays a third image on a display interface on the body. For a display interface on a electronic apparatus of the invention, it can display a third image including real-time video captured by a first photo-taking unit and location scene captured by a second photo-taking unit. A third image on the display interface also can be transmitted to distant connecting party via wireless signals.

## Description

### BACKGROUND OF THE INVENTION

### Field of the Invention:

The present invention generally relates to an electronic apparatus, and more particularly, to an electronic apparatus with two photo-taking units.

### Description of the Related Art

A conventional mobile telecommunication apparatus simply functions for communication. Besides, in order to attract consumers to purchase, generally a mobile telecommunication apparatus adds many additional multimedia functions such as for playing video, playing music, playing game, and etc. For consumer's convenience, setting a photo-taking unit in a mobile telecommunication apparatus allows consumers to captured images they want at anytime, anywhere; so that consumers do not miss memorable memory for forgetting carrying about a camera and can have the feel of multi-function in one.

For general mobile telecommunication apparatus, setting a photo-taking unit on back of the telecommunication apparatus lets users operate it as smoothly as shooting with a camera, and utilizing TFT-LCD on the mobile telecommunication apparatus, as a viewing window to monitor the viewing scene. With the wireless signal transmission of the mobile telecommunication apparatus speeding up, some manufacturers start to add a photo-taking unit on the front side as real-time video transmission, so as to the two parties in communication can be like face-to-face communication can see each other facial expression.

In the conventional mobile telecommunication apparatus with both front photo-taking unit and back photo-taking unit, generally when operating a photo-taking unit function, the other photo-taking unit is incapable. Disable users from transmitting real-time video for location scene and real-time video for user's facial expression to the connecting party at the same time.

### SUMMARY OF THE INVENTION

The present invention is to provide an electronic apparatus for conventional mobile electronic apparatus with two photo-taking units but can not transmit real-time video for location scene and real-time video for user's facial expression to the connector of connecting party at the same time.

According to the electronic apparatus of the present invention includes a body, a first photo-taking unit, a second photo taking unit, a processor, and a display interface. A first photo-taking unit is on a side of the body for capturing a first image. A second photo-taking unit is on the other side of the body for capturing a second image. A processor is built in the body for receiving a first image and a second image to compose a third image, where in the third image is composed from the first image and the second image. A display interface is built on the body for displaying the third image.

The electronic apparatus of the invention can utilize the processor to compose the third image from the first image captured by the first photo-taking unit and the second image captured by the second photo-taking unit, and to display on the interface. When user is connecting with a distant connecting party, the third image, including a real-time video for user's facial expression captured by the first photo-taking unit and a real-time video for location scene captured by the second photo-taking unit, not only displays on the display interface but transmits to the distant connecting party via wireless signals,

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG. 1 is a plan schematic view of an electronic apparatus in accordance with a first embodiment of the present invention;
FIG 2 is an illustration for a first overlapped image composed with a first image and a second image in accordance with the present invention; and
FIG 3 is an illustration for a second overlapped image composed with a first image and a second image in accordance with the present invention.

### DETAILED DESCRIPTION OF THE INVENTION

The present invention will now be described in detail with reference to the accompanying drawings, wherein the same reference numerals will be used to identify the same or similar elements throughout the several views. It should be noted that the drawings should be viewed in the direction of orientation of the reference numerals.

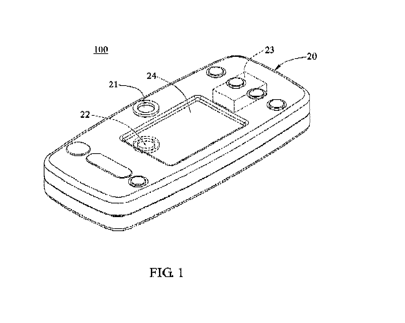

Referring to FIG. 1, a schematic view of an electronic apparatus in accordance with a first embodiment of the present invention includes an electronic apparatus 100, a body 20, a first photo-taking unit 21, a second photo-tacking unit 22, a processor 23, and a display interface 24.

The electronic apparatus could be a mobile telecommunication apparatus, portable computer or other mobile electronic apparatus with features such as light-weight and easy to carry, but wherein is not limitative. In the electronic apparatus 100 is built in hard disk, memory, display processor, and other electronic units to achieve functions of memory storage, computing, and so on, but wherein is not limitative.

A first photo-taking unit 21 is on a side of the body 20 for capturing a first image 25. The first photo-taking unit 21 can be a CCD (Charge Couple Device) or a CMOS (Complementary Metal Oxide Semiconductor) like an image sensor.

A second photo-taking unit 22 is on the other side of the body 20 for capturing a second image 26. The second photo-tacking unit 22 can be a CCD (Charge Couple Device) or a CMOS (Complementary Metal Oxide Semiconductor) like an image sensor.

A processor 23 is in the body 20 for receiving a first image 25 and a second image 26 to compose a third image 27. The third image 27 is composed from that the first image 25 overlaps the second image 26.

A display interface 24 is on the body 20 for displaying the third image 27, The display interface 24 can also have a solo display for the first image 25 or for the second image 26; of course, can display for other data (for instance: pictures, films, word characters, and etc.) . The display interface 24 can be TFT-LCE (Thin Film Transistor-Liquid Crystal Display) or can be OELD (Organic Electro Luminescent Display) and etc..

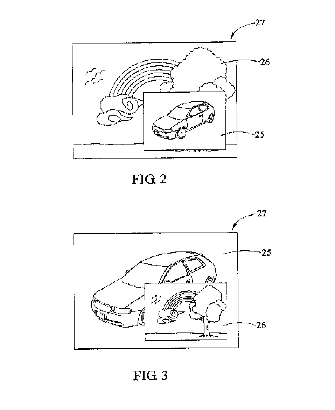

Referring to FIG. 2, is an illustration for a first overlapped image composed with a first image and a second image in accordance with the present invention. When the first image 25 overlaps on the second image 26, the first image 25 will cover a part of the second image 26 and substitute for that part. The lap location on the second image 26 is allowed users to adjust.

Referring to FIG. 3, is an illustration for a second overlapped image composed with a first image and a second image in accordance with the present invention. When the second image 26 overlaps on the first image 25, the second image 26 will cover a part of the first image 25 and substitute for that part. The lap location on the first image 25 is allowed users to adjust.

A processor 23 administers an alternative mode enabling users to exchange the mode of the first image 25 covering and substituting a part of the second image 26 or the mode of the second image 26 covering and substituting a part of the first image 25.

When a first image 25 and a second image 26 were overlapped, the processor 23 can analyze if any human facial appearance is in covered first image 25 or second image 26 (for instance, to detect a face by an oval shape with a triangle nose-alike shape in face center), then covered first image 25 and second image 26 will adjust position and dimension automatically avoiding covering the part of human facial appearance.

In the electronic apparatus 100 of the present invention, the processor 23 composes the third image 27 with a first image 25 token by the first photo-taking unit 21 and the second image 26 token by the second photo-tacking unit 22, and displays on the display interface 24. When users communicate the distant connecting party, the display interface 24 displays the third image 27 comprising both a real-time video of the user's face token by the first photo-taking unit 21 and the scene taken by the second photo-taking unit 22 at the same time. Furthermore, transmitting the third image displayed on the display interface 24 to the distance connecting party via wireless signals.

While the invention has been described by way of example and in tennis of the preferred embodiment, it is to be understood that the invention is not limited to the disclosed embodiments, and it will be obvious that the same may be varied in many ways. Such variations are not to be regarded as a departure from the spirit and scope of the invention, and all such modifications as would be obvious to one skilled in the art are intended to be included within the scope of the following clams.

## Claims

1. An electronic apparatus, comprising:
a body;
a first photo-taking unit on a side of the apparatus for capturing a first image;
a second photo-taking unit on an opposite side of the apparatus for capturing a second image;
a processor built in the body for receiving the first image and the second image to compose a third image, which is composed from the first image and the second image; and
a display interface huilt on the body for displaying the third image.

2. The third image according to claim 1, wherein the dimension of the first image is smaller than the size of the second image; and when the first image overlaps the second image, the first image covers a part of the second image.

3. The second image according to claim 1, wherein the dimension of the second image is smaller than the size of the first image.

4. The processor according to claim 1, wherein the processor administers an alternative method enabling users to exchange the mode of the first image covering and substituting a part of the second image or the mode of the second image covering and substituting apart of the first image.

5. The display interface according to claim 1, wherein the display interface can also provide a solo display for the first image or for the second image.
